# EUROPÄISCHE PATENTSCHRIFT

(11) **EP 0 711 460 B1**
(45) Veröffentlichungstag und Bekanntmachung des Hinweises auf die Patenterteilung: **26.03.1997**
(21) Anmeldenummer: 94920892.0
(22) Anmeldetag: 16.07.1994
(51) Int. Cl.: H01M 2/12

(54) **GASDICHTER ALKALISCHER AKKUMULATOR MIR VENTILBAUGRUPPE**
GAS-TIGHT ALKALINE ACCUMULATOR WITH A VALVE ASSEMBLY
ACCUMULATEUR ALCALIN ETANCHE AUX GAZ COMPORTANT UN ENSEMBLE SOUPAPE

(30) Priorität: 29.07.1993 DE 4325464
(43) Veröffentlichungstag der Anmeldung: 15.05.1996
(73) Patentinhaber: Christoph Emmerich GmbH & Co. KG, D-60435 Frankfurt am Main (DE)
(72) Erfinder: KILB, Manfred, D-60435 Frankfurt am Main (DE)
(74) Vertreter: Blumbach, Kramer & Partner
(86) Internationale Anmeldenummer: DE9400835
(87) Internationale Veröffentlichungsnummer: WO9504381

(56) Entgegenhaltungen:
- EP-A- 0 049 081
- EP-A- 0 306 146
- EP-A- 0 546 220
- DE-A- 2 042 417

## Beschreibung

Die Erfindung betrifft einen gasdichten alkalischen Akkumulator.

Im Bereich der Elektronik werden immer höhere Forderungen an derartige Akkumulatoren gestellt. Ständig zunehmende Mobilität und wachsende Ansprüche an den Bedienungskomfort zwingen zur Entwicklung von immer leistungsfähigeren, leichteren und kleineren Energiequellen. So werden beispielsweise handgehaltene Mobiltelefone, wie heutige D-Netz- oder zukünftige E-Netz-Telefone zwar immer kleiner und leichter, müssen jedoch, um überhaupt Markterfolge verzeichnen zu können, minimale Zeiten der Betriebsbereitschaft, die üblicherweise im Bereich von mehreren Stunden liegen, sicherstellen.

Bei der Entwicklung integrierter Schaltungen und höchstintegrierter Chipsätze für derartige Mobiltelefone oder andere portable Geräte, wie z.B. Lap- oder Palm-Tops (tragbare Rechner), Camcorder, Hörgeräte, werden immense Summen für die Miniaturisierung der elektronischen Schaltungsbaugruppen aufgewendet, jedoch bedarf es ebenfalls entsprechenden kleiner Energiequellen.

Mit der entwicklung prismatischer Kunststoffgehäuse für gasdichte alkalische Akkumulatoren konnten bereits beachtliche Erfolge bei der Verbesserung dieser Akkumulatoren-Eigenschaften erzielt werden. Die Verwendung eines leichten Kunststoffgehäuses und die Anpassung des Gehäuses an die vom jeweiligen Gerätehersteller vorgegebenen Geometrien oder die Anpassung an weitverbreitete rechteckförmige Gehäuseausbildungen sorgen für leichte Akkumulatoren mit hoher Speicherdichte. Mit angepaßten Elektrodenformen läßt sich nahezu das vollständige verbleibende Gerätevolumen zur Speicherung elektrischer Ladung verwenden; s. diesbezüglich die deutsche Patentanmeldung P 43 25 464, deren Offenbarungsinhalt durch Zitierung hier vollständig miteinbezogen und zum Inhalt der vorliegenden Anmeldung gemacht wird.

Gerade bei leichten und kleinen Akkumulatoren ist jedoch dem Berstschutz hohe Aufmerksamkeit zu widmen, um nicht unnötig durch zusätzliche Materialstärke oder aufwendigere Gehäusekonstruktionen von den gewonnenen Vorteilen Abstriche machen zu müssen. Bei einer Überladung oder Aufladung mit zu hohen Strömen sowie auch nach einer Umpolung oder einem Kurzschluß können im Innern des Gehäuses hohe Überdrücke auftreten, die schließlich zu einem Bersten solcher Zellen führen können.

Obwohl glas- oder kohlefaserverstärkte Kunststoffe höchste Festigkeiten und Schlagzähigkeiten aufweisen, muß jederzeit das Bersten des Akkumulators mit Sicherheit ausgeschlossen werden können. Insbesondere bei handgehaltenen Geräten kann das explosionsartige Austreten des stark alkalischen und ätzenden Elektrolyten zur Verletzung von Personen und/oder zur Schädigung teurer Geräte führen.

Zur Beherrschung der Überdrücke und der damit verbundenen Sicherheitsrisiken benutzt man bei größeren Akkumulatoren einschraubbare Überdruckventile, die jedoch aufgrund des zusätzlichen Platzbedarfs für das Schraubgewinde und die in der Regel aufwendig konstruierte Ventilbaugruppe bei kleinen gasdichten alkalischen Akkumulatoren keinen Einsatz finden können.

Auch die auf dem Gebiet gasdichter alkalischer Akkumulatoren mit metallischem Gehäuse bekannten Sollbruchstellen sind im Hinblick auf die Schädigung hochwertiger Geräte beim fortdauernden Austritt des Elektrolyten von Nachteil. Die Sollbruchstelle führt nach ihrem Öffnen weiterhin zu einer Undichtigkeit des Akkumulatorgehäuses, und es kann somit zu dem unerwünschten weiteren Elektrolytaustritt kommen.

Versuche haben darüber hinaus ergeben, daß derartige Sollbruchstellen von Metallgehäusen nicht direkt auf Kunststoffgehäuse übertragbar sind. Metallische Gehäuse, insbesondere von Rundzellen, widerstehen zum Teil Drücken von 20 bar und höher, jedoch können prismatische, insbesondere rechteckförmige Kunststoffgehäuse bei derart hohen Überdrücken Ausbauchungen aufweisen, die deren Maßhaltigkeit stören und somit ebenfalls vermieden werden sollen.

Auch die bei Blei-Säure-Akkumulatoren entwickelten Konzepte sind in der Regel nicht auf kleine alkalische gasdichte Akkumulatoren mit hoher Leistungsdichte übertragbarn. Blei-Säure-Akkumulatoren verfügen in der Regel über wesentlich mehr Platz, und weder das Gewicht noch die Form von zusätzlichen Ventilen spielen eine wesentliche Rolle.

Die EP-A1-0 049 081 zeigt eine elektrochemische Zelle mit einem im Polkontakt angeordneten Ventil. Durch die Anordnung des Ventils im Polkontakt ist es möglich, das für das Ventil benötigte Volumen nicht innerhalt der Zelle zu beanspruchen und somit den Speicherkapazität reduzierenden Volumenverlust zu vermeiden.

Die EP-A1-0 306 146 zeigt eine Ventilbaugruppe, die jedoch weniger zum Abbau von Überdruck, sondern zur Belüftung einer Batteriekammer ausgebildet ist. Die dort gezeigten zylindrischen Ventilelemente umschließen vorhangförmig mit nur leichtem Anlagedruck den Ventilsitz. Aufgrund der verbleibenden kleinen Gasvolumina genügt in der Regel bei alkalischen Akkumulator der Austritt sehr geringer Mengen, um zu einem erheblichen Druckabbau zu gelangen.

Der Erfindung liegt somit die Aufgabe zugrunde, die Betriebssicherheit eines Akkumulators des im Oberbegriff des Anspruchs 1 genannten Typs zu erhöhen und gleichzeitig die vorstehend geschilderten Nachteile zu vermeiden oder zumindest zu mildern.

Diese Aufgabe wird durche einen Akkumulator mit den Merkmalen des Anspruchs 1 gelöst.

Durch das deformierbare Element wird bei in der Zelle auftretenden Überdruck das Öffnen und nach Abbau des Überdruckes das sofortige Wiederverschließen bewirkt, so daß es lediglich zu einem kurzzeitigen Abgasen kommt und nur geringste Mengen von Gas oder mitgerissenen Elektrolytbestandteilen austreten. Hierdurch wird die Kapazität des Akkumulators, wenn überhaupt, so nur in geringem Umfang nachteilig beeinflußt.

Liegt das deformierbare Element durch seine eigene Elastizität kraftbeaufschlagt dichtend an der Öffnung des Akkumulatorgehäuses an, so wird durch ein einziges elastisches deformierbares Element sowohl das Freigeben der Öffnung bei Überdruck als auch die Dichtwirkung im normalen Betriebszustand erreicht. Beide Funktionen benötigen nur ein Bauteil, wodurch die Ventilgruppe bei geringem Platzbedarf einfach herstellbar ist. Volumenverluste bleiben niedrig, und eine geeignete, an späterer Stelle detaillierter beschriebene Anordnung der Ventilbaugruppe kann Kapazitätsverluste vermeiden.

Stützt sich das deformierbare Element an der der Öffnung gegenüberliegenden Seite ab und erfährt es hierdurch eine definierte Stauchung, so kann ein vorgebbarer Überdruckwert zum Öffnen des Ventils erzeugt werden. Mit bekanntem Elastizitätsmodul läßt sich die Stauchung des deformierbaren Elements zusammen mit der bekannten Fläche der Öffnung innerhalb des Akkumulatorgehäuse ausgehend vom vorgegebenen Überdruckwert einfach berechnen. Darüber hinaus können verschiedene Werte des Überdrucks, beispielsweise für verschiedene Akkumulatorausführungen, auf einfache Weise lediglich durch die Wahl der Länge des deformierbaren Elements realisiert werden.

Bei rechteckförmigen Akkumulatoren im Größenbereich von etwa 17 mm x 6 mm x 48 mm konnte der Überdruck, ab dem das Ventil öffnete, zwischen 2,5 und 10 bar auf einfache Weise reproduzierbar eingestellt werden. Beliebige andere Überdruckwerte sind jedoch ebenfalls erreichbar. Ein Überdruck von 3,5 bar oder 4,5 bar erwies sich zur Vermeidung der vorstehend geschilderten Nachteile als zweckmäßig.

Ist dem deformierbaren Element benachbart ein Austrittskanal angeordnet, der sich innerhalb einer Wand neben dem deformierbaren Element erstreckt, ergibt sich trotz der geringen Größe des Austrittskanals bereits ein Labyrinth für austretende Gase sowie für mitgerissene Teile des Elektrolyten. Der Druckabbau erfolgt gleichmäßiger, da der Austrittskanal mit seinem Querschnitt das definierte Abgasen bewirkt, und austretende Gasanteile bereits innerhalb des Austrittskanals abgebremst werden. Die Ausbildung des Austrittskanals innerhalb einer Wand der Kammer des deformierbaren Elements ist sowohl kostengünstig ohne weitere Baugruppen und fertigungstechnisch einfach möglich.

Ist das deformierbare Element mit seitlichem Spiel innerhalb einer Ventilkammer angeordnet, führt das Spiel zwischen dem Dichtelement und der beherbergenden Kammer zu einem Raum mit Vorkammereffekt, hierbei entspannt sich der Überdruck bereits innerhalb dieser Kammer, und das Abgasen erfolgt gegenüber dem Äußeren des Akkumulators mit wesentlich niedrigerem Druck.

Mit einem von der Außenseite her einpreßbaren Rastelement kann die Ventilbaugruppe unabhängig von den verbleibenden Akkumulatorbaugruppen gefertigt werden. In ansonsten montierten Akkumulatoren kann nachträglich das deformierbare Element in die Ventilkammer eingesetzt und das Rastelement von außen aufgedrückt werden. Es ist auf diese Weise möglich, für verschiedene Überdrücke gleiche Akkumulatoren bei einfacher Lagerhaltung zu verwenden und je nach Anwendung mit verschieden langen deformierbaren Elementen zu konfigurieren.

Wird bei einer alternativen Ausführungsform das deformierbare Element durch eine tassenförmige Abdeckkappe seitlich übergriffen und an seiner Rückseite in anliegendem Kontakt gehalten, wobei die Abdeckkappe eine VentilAustrittsöffnung aufweist, läßt sich eine mechanischstabile und gegen äußere Einflüsse abgeschirmte Ventilbaugruppe mit kleinsten Abmessungen aufbauen. Durch die Verschweißung der Abdeckkappe mit dem Gehäuse, vorzugsweise durch thermisches oder durch Ultraschall-Schweißen erfährt das Gehäuse eine weitere mechanische Verstärkung. Die zusätzliche Ventilaustrittsöffnung in der Abdeckkappe erhöht den Vorkammereffekt und kann die Geschwindigkeit der austretenden Gase weiter senken.

Wird bei einer weiteren alternativen Ausführungsform das deformierbare Element durch eine tassenförmige Abdeckkappe an der Vorderseite in anliegendem Kontakt gehalten und ist dabei die Gehäuseöffnung im Boden der tassenförmigen Abdeckkappe angeordnet, so ist die Ventilbaugruppe von außen gegen mechanische Einflüsse geschützt nur noch durch die Austrittsöffnung zu erkennen.

Ein seitlicher Rand der Abdeckkappe, welcher im äußeren Endbereich breiter ausgebildet ist, verbessert den mechanischen Kontakt zwischen Abdeckkappe und Gehäuse, da das Verschweißen durch größere aneinander anliegende Wandbereiche unterstützt wird. Darüber hinaus wird die Kriechstrecke für das Austreten von Gasen oder Elektrolyten verlängert und die Dichteigenschaften verbessert.

Die Anordnung des Ventils im Deckel des Akkumulators ermöglicht es, die Ventilbaugruppe gleichzeitig mit dem Deckel zu fertigen. Wird das Ventil zwischen den Polkontakten des Akkumulators angeordnet, ergibt sich hierbei ein mechanisch vor äußeren Einflüssen geschützter Ort, und es kann der Platz zwischen den Elektrodenzuleitungen innerhalb des Akkumulators ohne Kapazitätsverluste genutzt werden. Weiterhin kann der Ventilkörper als mechanische Zentrierung und/oder Halterung für die Elektrodenbaugruppe dienen und deren Lage mechanisch innerhalb des Akkumulators sichern.

Eine fertigungstechnisch äußerst vorteilhafte Ausführungsform umfaßt das Heiß-in-Heiß-Spritzschweißen eines Teils des Kunststoffgehäuses mit dem deformierbaren Element. Bei dem verwendeten Heiß-in-heiß-Spritzschweißen bildet die verschweißte Fläche beim Einspritzen des Kunststoffs des deformierbaren Elements entlang der Berührungsfläche zum Kunststoff des Akkumulatorengehäuses einen mechanisch festen Halt. Vorzugsweise besteht dann sowohl der zumindest eine Teil des Gehäuses als auch das deformierbare Element aus einem Thermoplast-Elastomer, insbesondere aus einem modifizierten Polyamid, einem Styrol-Ethylen-Butylen-Styrol-Copolymer, und/oder einem Polypropylen. Der harte Kunststoff wird beispielsweise durch Beigabe von Weichmachern und/oder durch Wahl seines Vernetzungsgrades in seiner Härte so eingestellt, daß er die üblichen Gehäusefestigkeiten erreicht. Der weichere Kunststoff des deformierbaren Elements kann durch Beigabe von Weichmachern und/oder durch die Wahl seines Vernetzungsgrades in seiner Härte so eingestellt werden, daß er im Bereich bekannter Dichtungsmaterialien liegt.

In besonders vorteilhafter Weise läßt sich das deformierbare Element gleichzeitig mit den Dichtungen des Akkumulatorgehäuses heiß-in-heiß-spritzen oder gleichzeitig mit der Deckel- und/oder den Polkontaktdichtungen heiß-in-heiß-spritzen.

Die Erfindung wird nachstehend anhand verschiedener Ausführungsbeispiele und unter Bezugnahme auf die beigefügten Zeichnungen im einzelnen beschrieben. Es zeigen:
- Fig. 1: einen Querschnitt in Längsrichtung durch einen Akkumulator gemäß einem ersten erfindungsgemäßen Ausführungsbeispiel,
- Fig. 2: einen vergrößerten Ausschnitt der Ventilbaugruppe des in Fig. 1 dargestellten Akkumulators ohne das Rastelement und ohne das deformierbare Element,
- Fig. 3: eine Ansicht der Deckelbaugruppe des Akkumulators aus den Fig. 1 und 2 nach dem Spritzschweißen der Dichtungen von der Innenseite des Akkumulators,
- Fig. 4: eine Ansicht der Deckelbaugruppe des Akkumulators aus den Fig. 1 bis 3 nach dem Spritzschweißen der Dichtungen von vorne,
- Fig. 5: einen Querschnitt entlang der Linie A-A aus Fig. 4 durch die Deckelbaugruppe,
- Fig. 6: eine Darstellung des Zusammenbaus der erfindungsgemäßen Ventilbaugruppe des ersten Ausführungsbeispiels,
- Fig. 7: einen Querschnitt durch eine Ventilbaugruppe einer zweiten erfindungsgemäßen Ausführungsform,
- Fig. 8: einen Querschnitt durch eine Ventilbaugruppe einer zweiten erfindungsgemäßen Ausführungsform, jedoch 90° in zu dem in Fig. 7 dargestellten Querschnitt verdrehter Richtung,
- Fig. 9: eine Aufsicht auf die in den Fig. 7 und 8 dargestellte Ventilbaugruppe von außen,
- Fig. 10: einen Querschnitt durch eine dritte erfindungsgemäße Ventilbaugruppe gemäß einem dritten Ausführungsbeispiel,
- Fig. 11: eine Aufsicht auf die in Fig. 10 dargestellte Ventilbaugruppe von außen.

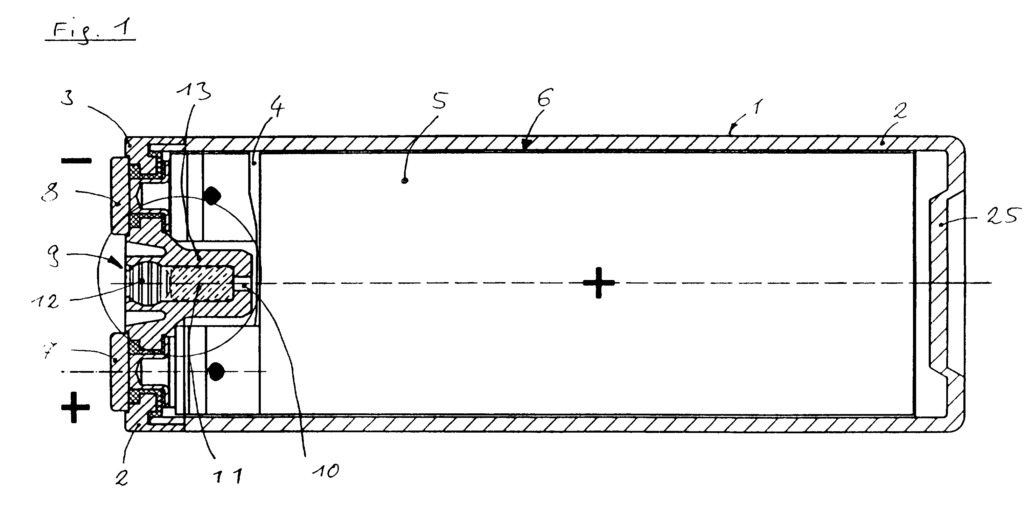

Der in Fig. 1 dargestellte gasdichte alkalische Akkumulator gemäß einer ersten erfindungsgemäßen Ausführungsform ist generell mit dem Bezugszeichen 1 bezeichnet und umfaßt ein zumindest teilweise aus Kunststoff bestehendes Gehäuse 2 mit einem Deckel 3. Innerhalb des Gehäuses 2 sind von einem Elektrolyten umgeben und durch einen Separator 4 voneinander getrennte positive Elektroden 5 und negative Elektroden 6 angeordnet. Die Elektroden 5, 6 sind jeweils mit einem positiven Polkontakt und einem negativen Polkontakt 8 für das Zu- und Abführen von elektrischem Strom verbunden.

Ein Ventil 9 ist zwischen den Polkontakten 7, 8 im Deckel 3 angeordnet und umfaßt eine Öffnung 10, die durch das Gehäuse 2, insbesondere durch den Deckel 3, des Akkumulators 1 führt. Dichtend an der Öffnung 10 anliegend ist ein deformierbares Element 11 durch ein Rastelement 12 gestaucht in einer Ventilkammer 13 angeordnet. Beim Auftreten von Überdruck innerhalb des Gehäuses 2 bewirkt der an der Querschnittsfläche der Öffnung 10 anliegende Druck ab einem vorgebbaren Überdruckwert das Zurücktreten des deformierbaren Elements 11 und somit zumindest eine teilweise Freigabe der Öffnung 10, wodurch es zu einem Gasaustritt und einem Absinken des Überdrucks innerhalb des Gehäuses 2 kommt. Nach dem Absinken des Überdrucks bewirkt die daraufhin wiedererfolgende dichtende Anlage des deformierbaren Elements 11 an der Öffnung 10 das Beenden des Gasaustritts.

Durch die Wahl geeigneter Materialien, wie beispielsweise Gummi, oder der an späterer Stelle detaillierter beschriebenen Thermoplaste kann das deformierbare Element durch seine eigene Elastizität ohne weitere Federelemente kraftbeaufschlagt dichtend an der Öffnung 10 anliegen.

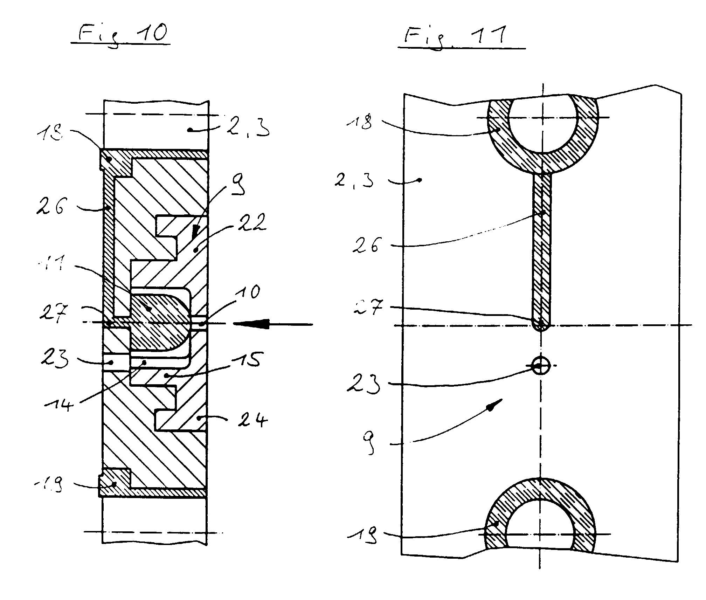

Durch das Rastelement 12 kommt es beim Zusammenbau der Ventilgruppe, welcher anschaulich in Fig. 6 dargestellt ist, zu einer definierten Stauchung des deformierbaren Elementes 11, die zur Einstellung eines vorbestimmten Überdrucks nutzbar ist. Das Rastelement 12 besteht aus chemisch inertem Material, insbesondere aus dem gleichen Material wie das Gehäuse 2. Bei bekanntem Elastizitätsmodul des Materials des deformierbaren Elementes läßt sich aus der Querschnittsfläche der Öffnung 10 und dem vorgegebenen Überdruck zum Öffnen die nötige Kraft für die dichtende Anlage des deformierbaren Elements 11 und somit die erforderliche Stauchung berechnen. Der Überdruck, ab dem das Ventil öffnet, liegt zwischen 2,5 und 10 bar, vorzugsweise bei 3,5 oder 4,5 bar.

Dem deformierbaren Element 11 benachbart ist ein Austrittskanal 14 angeordnet, der sich innerhalb einer Wand 15 in der Ventilkammer 13 neben dem deformierbaren Element 11 von der Öffnung 10 zum Äußeren des Akkumulators 1 oder bis zu den elastischen Armen 16, 17 erstreckt.

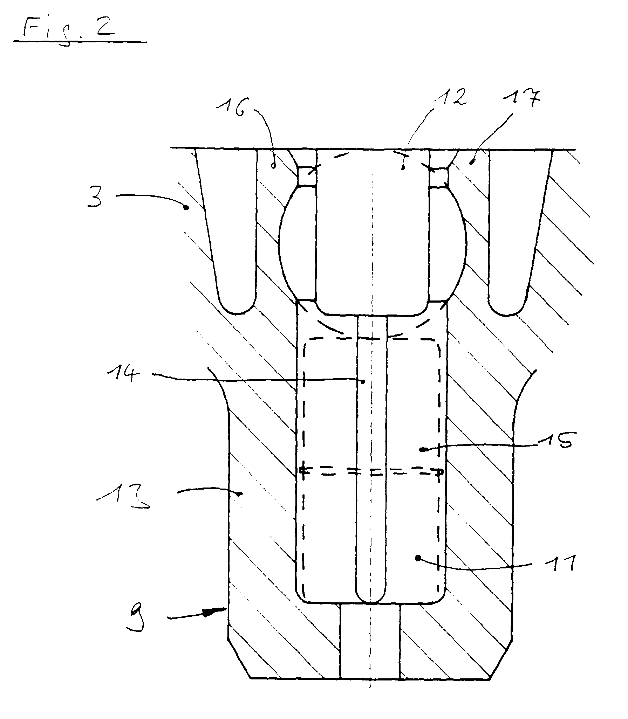

Das in Fig. 2 nur schematisch dargestellte Rastelement 12 ist zwischen den beiden elastischen Armen 16, 17 des Gehäuses 2, die sich in Längsrichtung an die Ventilkammer 13 anschließen, durch elastischen Formenschluß sicher gehalten.

Zwischen dem Rastelement 12 und der Öffnung 10 ist das deformierbare Element 11 derart eingespannt, daß ein seitliches Spiel innerhalb der Ventilkammer 12 auch nach der Stauchung des deformierbaren Elementes 11 verbleibt.

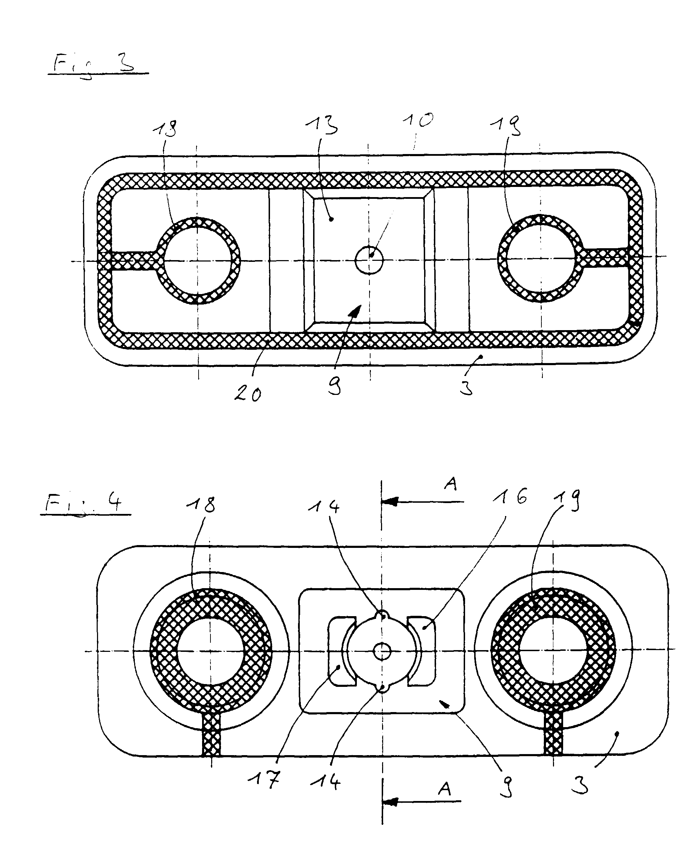

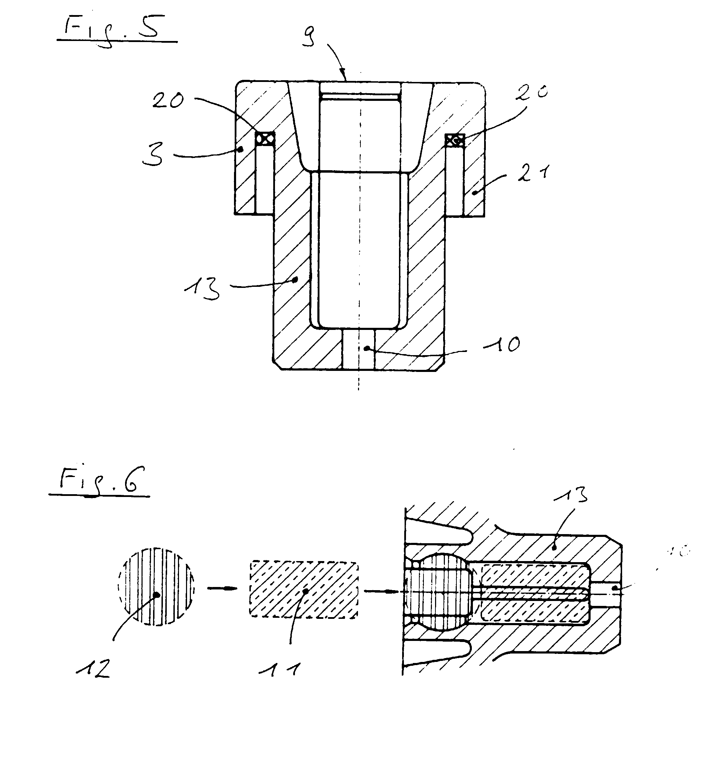

In den Fig. 3 und 4 ist das im Deckel 3 angeordnete Ventil 9 in Aufsicht auf die Deckelbaugruppe von der Vorderseite und der Rückseite her dargestellt. Zu erkennen sind ebenfalls die Dichtungen 18, 19 der Polkontakte 7, 8 sowie die Dichtung 20 für die Abdichtung des Deckels 3. Die Dichtungen 18, 19 und 20 sind jeweils durch Heiß-in-Heiß-Spritzschweißen mit dem Deckel verbunden.

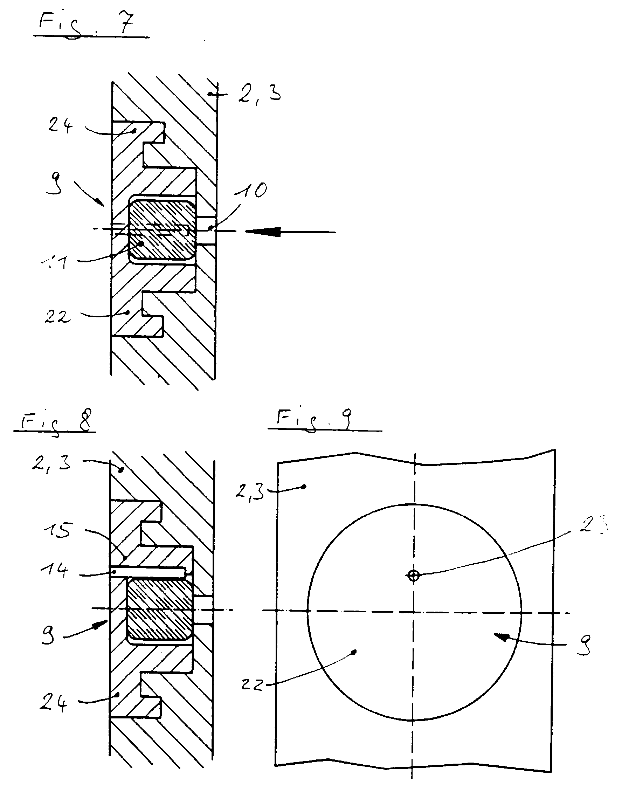

Die Dichtung 20 für den Deckel 3 ist gemäß der Darstellung in Fig. 5 so angeordnet, daß vorstehende seitliche Abschnitte 21 des Deckels 3 ein sicheres Verschweißen mit dem restlichen Teil des Gehäuses 2 ermöglichen.

In den Fig. 7, 8 und 9 ist eine zweite erfindungsgemäße Ausführungsform des Ventils 9 dargestellt.

Es wird darauf hingewiesen, daß bei sämtlichen Ausführungsformen gleiche oder gleichwirkende Bestandteile mit denselben Bezugszeichen versehen sind.

Bei dieser Ausführungsform ist das deformierbare Element 11 in einer Ventilkammer 13 angeordnet, die durch einen Abschnitt des Gehäuses 2, insbesondere des Deckels 3, und eine Abdeckkappe 22 gebildet wird. Die Abdeckkappe 22 übergreift das deformierbare Element 11 seitlich und liegt an dessen Rückseite so an, daß die vorstehend beschriebene definierte Stauchung erreicht wird. Der in der Wand 15 angeordnete Austrittskanal 14 weist eine Ventilaustrittsöffnung 23 zur Außenseite des Akkumulators 1 auf. In radialer Richtung weist die Abdeckkappe einen seitlichen Rand 24 auf, der im äußeren Endbereich breiter ausgebildet ist und formschlüssig in das Gehäuse 2, insbesondere den Deckel 3, eingefügt ist. Im Bereich des seitlichen Randes 24 ist die Abdeckkappe 22 mit dem Gehäuse 2, insbesondere mit dem Deckel 3, thermisch oder ultraschall-verschweißt.

Wie in Fig. 1 dargestellt, kann das Ventil 9 der zweiten und auch der nachfolgend beschriebenen dritten Ausführungsform im Deckel 3 zwischen den Polkontakten 7 und 8 angeordnet sein.

In alternativer Ausgestaltung kann das Ventil 9 der zweiten und dritten Ausführungsform jedoch an einer beliebigen anderen Stelle, wie beispielsweise im Boden 25 des Akkumulators 1, angeordnet sein.

Die dritte erfindungsgemäße Ausführungsform weist eine Abdeckkappe 22 auf, in welcher die Öffnung 10, die bei dem vorhergehenden Ausführungsbeispiel ausgebildet ist. Die Austrittsöffnung 23 ist im Gehäuse 2, insbesondere im Deckel 3, ausgebildet. Diese Abdeckkappe 22 liegt an der Vorderseite des deformierbaren Elements 11 an.

Das deformierbare Element 11 ist durch Heiß-in-Heiß-Spritzschweißen zusammen mit dem Gehäuse 2, insbesondere dem Deckel 3, hergestellt. Ein Kanal 26 verbindet hierzu die Dichtungen 18, 19 der Polkontakte 7, 8 mit einer Öffnung 27, die den Durchtritt des heiß eingespritzen Kunststoffs zur Ausbildung des deformierbaren Elements 11 ermöglicht.

Bei der Herstellung des deformierbaren Elemtes 11 werden je nach Anordnung des Ventils 9 vorzugsweise die Dichtungen 18, 19 für die Polkontakte 7, 8 und/oder die Dichtung 20 für den Deckel 3 mit ausgebildet.

Obwohl das deformierbare Element 11 aus einem beliebigen chemisch beständigen elastischen Material bestehen kann, werden beim Heiß-in-Heiß-Spritzschweißen Thermoplast-Elastomere, insbesondere modifiziertes Polyamid, Styrol-Ethylen-Butylen-Styrol-Copolymer und/oder Polypropylen hierfür bevorzugt. Der Kunststoff des deformierbaren Elements 11 ist durch Beigabe von Weichmachern und/oder durch Wahl des Vernetzungsgrades in seiner Härte so eingestellt, daß diese im Bereich bekannter Dichtungsmaterialien liegt. Der Kunststoff des Gehäuses 2, insbesondere des Deckels 3, ist in seiner Härte so eingestellt, daß er die üblichen Gehäusefestigkeiten erreicht.

Zur Verbesserung der Festigkeitseigenschaften ist in weiterer Ausgestaltung dem Kunststoff des Gehäuses 2, insbesondere des Deckels 3, Glas-, Carbon-, Keflar- oder Boron-Fasermaterial eingebettet beigegeben.

## Patentansprüche

1. Gasdichter alkalischer Akkumulator mit einem zumindest teilweise aus Kunststoff bestehenden Gehäuse, in dem von einem Elektrolyten umgebene und jeweils durch einen Separator voneinander getrennte Elektroden angeordnet sind, wobei die Elektroden mit Polkontakten für das Zu- und Abführen von elektrischem Strom verbunden sind, mit einem Ventil zum Abbauen von im Akkumulator herrschendem Überdruck,
dadurch gekennzeichnet,
daß das Ventil (9) mit eimer durch das Gehäuse (2, 3) des Akkumulators (1) führenden Öffnung (10) und mit einem deformierbaren Element (11), das bei innerhalb des Gehäuses (2, 3) auftretendem Überdruck eine Freigabe der Öffnung (10) und nach einem Absinken des Überdrucks ein Verschließen der Öffnung (10) bewirkt, versehen ist, wobei durch eine definierte Stauchung des deformierbaren Elements (11) ein vorgebbarer Überdruck zum Öffnen des Ventils (9) erzeugt ist.

2. Akkumulator nach Anspruch 1,
dadurch gekennzeichnet, daß das deformierbare Element (11) durch seine eigene Elastizität kraftbeaufschlagt dichtend an der Öffnung (10) anliegt.

3. Akkumulator nach Anspruch 1 oder 2,
dadurch gekennzeichnet, daß sich das deformierbare Element (11) der Öffnung (10) gegenüberliegend abstützt.

4. Akkumulator nach Anspruch 1, 2 oder 3,
dadurch gekennzeichnet, daß der Überdruck, ab dem das ventil (9) öffnet, zwischen 2,5 und 10 bar, insbesondere 3,5 bar, beträgt.

5. Akkumulator nach einem der vorstehenden Ansprüche,
dadurch gekennzeichnet, daß dem deformierbaren Element benachbart ein Austrittskanal (14) angeordnet ist, der sich innerhalb einer Wand (15) neben dem deformierbaren Element (11) erstreckt.

6. Akkumulator nach einem der vorstehenden Ansprüche,
dadurch gekennzeichnet, daß das deformierbare Element (11) mit seitlichem Spiel innerhalb einer Ventilkammer (13) angeordnet und an der Rückseite durch ein Rastelement (12) gehalten ist.

7. Akkumulator nach einem der Ansprüche 1 bis 5,
dadurch gekennzeichnet, daß das deformierbare Element (11) durch eine tassenförmige Abdeckkappe (22) seitlich übergriffen und an seiner Rückseite in anliegendem Kontakt gehalten wird, wobei die Abdeckkappe (22) eine Ventilaustrittsöffnung (23) aufweist.

8. Akkumulator nach einem der Ansprüche 1 bis 5,
dadurch gekennzeichnet, daß das deformierbare Element (11) durch eine tassenförmige Abdeckkappe (22) seitlich übergriffen und an der Vorderseite in anliegendem Kontakt gehalten wird, wobei die Öffnung (10) im Boden der tassenförmigen Abdeckkappe (22) angeordnet ist und das Gehäuse (2, 3) eine Austrittsöffnung (23) aufweist.

9. Akkumulator nach Anspruch 7 oder 8,
dadurch gekennzeichnet, daß die Abdeckkappe (22) einen seitlichen Rand (24) aufweist, der im äußeren Endbereich breiter ausgebildet ist.

10. Akkumulator nach einem der vorstehenden Ansprüche,
dadurch gekennzeichnet, daß das Ventil (9) im Deckel (3) des Akkumulators (1) angeordnet ist.

11. Akkumulator nach einem der vorstehenden Ansprüche,
dadurch gekennzeichnet, daß das Ventil (9) zwischen den Polkontakten (7, 8) des Akkumulators (1) angeordnet ist.

12. Akkumulator nach einem der vorstehenden Ansprüche,
dadurch gekennzeichnet, daß der Akkumulator (1) ein prismatischer Akkumulator, insbesondere ein rechteckförmiger Akkumulator, ist.

13. Akkumulator nach einem der Ansprüche 8 bis 12,
dadurch gekennzeichnet, daß das deformierbare Element (11) zumindest einen Teil des Gehäuses (2, 3) heiß-in-heißspritzgeschweißt ist.

14. Akkumulator nach Anspruch 13,
dadurch gekennzeichnet, daß das deformierbare Element (11) gleichzeitig mit Dichtungen des Akkumulatorgehäuses (18, 19, 20) heiß-in-heiß-spritzgeschweißt ist.

15. Akkumulator nach Anspruch 13 oder 14,
dadurch gekennzeichnet, daß das deformierbare Element (11) gleichzeitig mit der Deckeldichtung (20) und/oder den Polkontaktdichtungen (18, 19) heiß-in-heiß-spritzgeschweißt ist.

16. Akkumulator nach einem der vorstehenden Ansprüche,
dadurch gekennzeichnet, daß zumindest ein Teil des Gehäuses (2) des Akkumulators (1) und das deformierbare Element (11) aus einem Thermoplast-Elastomer, insbesondere aus einem modifizierten Polyamid, einem Styrol-Ethylen-Butylen-Styrol-Copolymer, und/oder einem Polypropylen bestehen, wobei das Gehäuse (2) und das deformierbare Element (11) eine verschiedene Härte aufweisen.

17. Akkumulator nach einem der vorstehenden Ansprüche,
dadurch gekennzeichnet, daß in den Kunststoff des Gehäuses (2, 3) Glas-, Carbon-, Keflar- oder Boron-Fasern eingebettet sind.

## Claims

1. A gas-tight alkaline storage battery with an at least partly plastic casing containing electrodes surrounded by an electrolyte and each separated by a separator from the other electrodes, the electrodes being connected to terminal contacts for supplying and discharging electric current and having a valve for dissipating the excess pressure in the battery, characterised in that the valve (9) has an opening (10) leading through the casing (2, 3) of the battery (1) and has a deformable element (11) which unblocks the opening (10) when an excess pressure occurs in the casing (2, 3) and closes the opening (10) when the excess pressure decreases, a presettable excess pressure for opening the valve (9) being generated by defined compression of the deformable element (11).

2. A battery according to claim 1, characterised in that the deformable element (11) abuts the opening (10) in sealing-tight manner, acted on by a force owing to its own elasticity.

3. A battery according to claim 1 or 2, characterised in that the deformable element (11) is braced opposite the opening (10).

4. A battery according to claim 1, 2 or 3, characterised in that the excess pressure beyond which the valve (9) opens is between 2.5 and 10 bar, more particularly 3.5 bar.

5. A battery according to any of the preceding claims, characterised in that an outlet duct (14) is disposed adjacent the deformable element and extends inside a wall (15) beside the deformable element (11).

6. A battery according to any of the preceding claims, characterised in that the deformable element (11) is disposed with lateral clearance inside a valve chamber (13) and held at the back by a catch element (12).

7. A battery according to any of claims 1 to 5, characterised in that the deformable element (11) is covered at the side by a cup-shaped cap (22) and at its back is held in abutting contact, the cap (22) having a valve outlet opening (23).

8. A battery according to any of claims 1 to 5, characterised in that the deformable element (11) is covered at the side by a cup-shaped cap (22) and at the front is held in abutting contact, the opening (10) being disposed in the bottom of the cup-shaped cap (22) and the casing (2, 3) having an outlet opening (23).

9. A battery according to claim 7 or 8, characterised in that the cover cap (22) has a side edge (24) which is made wider in the outer end region.

10. A battery according to any of the preceding claims, characterised in that the valve (9) is disposed in the cover (3) of the battery (1).

11. A battery according to any of the preceding claims, characterised in that the valve (9) is disposed between the terminal contacts (7, 8) of the battery (1).

12. A battery according to any of the preceding claims, characterised in that the battery (1) is a prismatic battery, more particularly a rectangular battery.

13. A battery according to any of claims 8 to 12, characterised in that the deformable element (11) is injection-welded hot-in-hot to at least a part of the casing (2, 3).

14. A battery according to claim 13, characterised in that the deformable element (11) is injection-welded hot-in-hot simultaneously with seals on the battery casing (18, 19, 20).

15. A battery according to claim 13 or 14,
characterised in that the deformable element (11) is injection-welded hot-in-hot simultaneously with the cover seal (20) and/or the terminal-contact seals (18, 19).

16. A battery according to any of the preceding claims, characterised in that at least a part of the casing (2), the battery (1) and the deformable element (11) are made of a thermoplastic elastomer, more particularly a modified polyamide, a styrene-ethylenebutylene-styrene copolymer and/or a polypropylene, the casing (2) having a different hardness from the deformable element (11).

17. A battery according to any of the preceding claims, characterised in that glass, carbon, keflar or boron fibres are embedded in the plastic of the casing (2, 3).

## Revendications

1. Accumulateur alcalin étanche aux gaz comportant un boîtier composé au moins partiellement de matière plastique, dans lequel sont disposées des électrodes entourées d'un électrolyte et séparées respectivement l'une de l'autre par un séparateur, les électrodes étant reliées aux contacts polaires pour l'arrivée et le départ de courant électrique , et une soupape pour la réduction d'une surpression régnant dans l'accumulateur,
caractérisé par le fait que la soupape (9) est munie d'une ouverture (10) passant à travers le boîtier (2, 3) de l'accumulateur (1) et d'un élément déformable (11) qui, lors d'une surpression apparaissant à l'intérieur du boîtier (2, 3), produit une libération de l'ouverture (10) et, après une diminution de la surpression, une fermeture de l'ouverture (10), étant entendu que par un écrasement défini de l'élément déformable (11) une surpression prédéterminée pour l'ouverture de la soupape (9) est créée.

2. Accumulateur selon la revendication 1, caractérisé par le fait que l'élément déformable (11) est en appui de manière étanche contre l'ouverture (10) en étant sollicité par sa propre élasticité.

3. Accumulateur selon la revendication 1 ou 2, caractérisé par le fait que l'élément déformable (11) est soutenu en face de l'ouverture (10).

4. Accumulateur selon la revendication 1, 2 ou 3, caractérisé par le fait que la surpression à partir de laquelle s'ouvre la soupape (9) est comprise entre 2,5 et 10 bars, en particulier est de 3,5 bars.

5. Accumulateur selon l'une des revendications précédentes, caractérisé par le fait qu'un canal de sortie (14) est disposé au voisinage de l'élément déformable, canal qui s'étend à l'intérieur d'une paroi (15) à côté de l'élément déformable (11).

6. Accumulateur selon l'une des revendications précédentes, caractérisé par le fait que l'élément déformable (11) est disposé avec un jeu latéral à l'intérieur d'une chambre de soupape (13) et est maintenu par un élément d'encliquetage (12) sur la face arrière.

7. Accumulateur selon l'une des revendications 1 à 5, caractérisé par le fait que l'élément déformable (11) est entouré latéralement par un capuchon en forme de tasse (22) et est maintenu en contact d'appui contre sa face arrière, le capuchon (22) comportant un orifice de sortie de soupape (23).

8. Accumulateur selon l'une des revendications 1 à 5, caractérisé par le fait que l'élément déformable (11) est entouré latéralement par un capuchon en forme de tasse (22) et est maintenu en contact d'appui contre la face avant, l'ouverture (10) étant disposée dans le fond du capuchon en forme de tasse (22) et le boîtier (2, 3) comportant un orifice de sortie (23).

9. Accumulateur selon la revendication 7 ou 8, caractérisé par le fait que le capuchon (22) comporte un rebord latéral (24) qui est réalisé plus large dans la zone d'extrémité extérieure.

10. Accumulateur selon l'une des revendications précédentes, caractérisé par le fait que la soupape (9) est disposée dans le couvercle (3) de l'accumulateur (1).

11. Accumulateur selon l'une des revendications précédentes, caractérisé par le fait que la soupape (9) est disposée entre les contacts polaires (7, 8) de l'accumulateur (1).

12. Accumulateur selon l'une des revendications précédentes, caractérisé par le fait que l'accumulateur (1) est un accumulateur prismatique, en particulier un accumulateur de forme rectangulaire.

13. Accumulateur selon l'une des revendications 8 à 12, caractérisé par le fait que l'élément déformable (11) est soudé par injection chaud-dans-chaud au moins à une partie du boîtier (2, 3).

14. Accumulateur selon la revendication 13, caractérisé par le fait que l'élément déformable (11) est soudé par injection chaud-dans-chaud simultanément avec les garnitures d'étanchéité du boîtier d'accumulateur (18, 19, 20).

15. Accumulateur selon la revendication 13 ou 14, caractérisé par le fait que l'élément déformable (11) est soudé par injection chaud-dans-chaud simultanément avec la garniture d'étanchéité de couvercle (20) et/ou les garnitures d'étanchéité des contacts polaires (18, 19).

16. Accumulateur selon l'une des revendications précédentes, caractérisé par le fait qu'au moins une partie du boîtier (2) de l'accumulateur (1) et l'élément déformable (11) se composent d'un élastomère-thermoplastique, en particulier d'un polyamide modifié, d'un copolymère styrène-éthylène-butène-styrène, et/ou d'un polypropylène, le boîtier (2) et l'élément déformable (11) présentant une dureté différente.

17. Accumulateur selon l'une des revendications précédentes, caractérisé par le fait que des fibres de verre, de carbone, de kevlar ou de bore sont noyées dans la matière plastique du boîtier (2, 3).
